# EUROPEAN PATENT APPLICATION

(11) **EP 2 174 779 A2**
(43) Date of publication of application: **14.04.2010**
(21) Application number: 09172059.9
(22) Date of filing: 02.10.2009
(51) Int. Cl.: B32B 5/22, B32B 27/18

(54) **Processes for Producing Multilayer Polytetrafluoroethylene Articles and Articles Formed Therefrom**

(30) Priority: 06.10.2008 US 246076
(71) Applicant: General Electric Company, Schenectady, NY 12345 (US)
(72) Inventor: Thottupurathu, Gopakumar, Overland Park, KS 66210 (US)
(74) Representative: Szary, Anne Catherine

(57) **Abstract**

A process of producing a multilayer polytetrafluoroethylene article includes filling a pre-form with two or more layers of a polytetrafluoroethylene fine powder, wherein at least one layer (102) comprises a functional additive and at least one layer (106) comprises a processing aid; disposing a separation layer (110) between the two or more layers, wherein the separation layer is configured to provide structural integrity to each layer during filling; extruding the two or more layers to obtain a multilayer extrudate; removing the processing aid; and stretching the multilayer extrudate to form the multilayer polytetrafluoroethylene article.

## Description

### BACKGROUND OF THE INVENTION

The present disclosure generally relates to a process for producing multilayer polytetrafluoroethylene articles, and more particularly a process for producing multilayer polytetrafluoroethylene articles having functional additive layers.

Porous polytetrafluoroethylene (PTFE) articles are utilized for many useful components, such as filters, fabrics, gaskets, electrical insulation and human implant devices. In particular, PTFE membranes are used for various purposes such as filters for gas or liquid, water vapor permeable and water-impermeable membrane preparation for clothes and sheets of medical use, as well as sealing or gaskets for piping or production facilities in chemical, food, and semiconductor industries.

These PTFE articles are typically produced by blending PTFE resin with a lubricant, compressing the blended resin into a billet, extruding the billet into an extrudate, drying the extrudate, calendering the extrudate (if desired), stretching or expanding the extrudate, and sintering the expanded extrudate to form the final article. The expanded PTFE (ePTFE) article can be manufactured in any extruded shape, including sheets, tape, tubes, rods or filaments, and the like.

For some PTFE and ePTFE articles, such as those used in applications like filtration, ventilation, and apparel, a backing layer is required to provide mechanical support to the PTFE membrane. Typically, a PTFE membrane is secured (e.g., laminated) to the backing layer and the backing layer will act as mechanical support for the PTFE membrane. Moreover, the backing layer also can provide functional attributes to the PTFE article, such as chemical resistance, mechanical durability, higher air permeability, odor removal, and the like. One example of a backing layer is a fabric substrate, which can be used for PTFE apparel applications. The backing layers provide attributes to the PFTE membranes that are not inherent to the PFTE polymer. Some drawbacks of the need for a backing layer, however, are the potential for delamination between the backing layer and the membrane, increased materials cost, additional process steps, and the like.

### BRIEF DESCRIPTION OF THE INVENTION

Disclosed herein are processes for producing multilayer expanded polytetrafluoroethylene articles, and the porous articles thereof. In one embodiment, the process includes filling a pre-form with two or more layers of a polytetrafluoroethylene fine powder, wherein at least one layer comprises a functional additive and at least one layer comprises a processing aid; disposing a separation layer between the two or more layers, wherein the separation layer is configured to provide structural integrity to each layer during filling; extruding the two or more layers to obtain a multilayer extrudate; removing the processing aid; and expanding the multilayer extrudate to form the multilayer expanded polytetrafluoroethylene article.

In another embodiment, the process includes filling a first portion of a pre-form with a layer of a first polytetrafluoroethylene fine powder mixed with about 15 to about 25 percent by weight processing aid, based on the total weight of the first polytetrafluoroethylene fine powder mixture; filling a second portion of the pre-form with a layer of a second polytetrafluoroethylene fine powder mixed with about 0.05 to about 20 percent by weight functional additive, based on the total weight of the second polytetrafluoroethylene fine powder mixture; disposing a separation layer between the first portion and the second portion, wherein the separation layer is configured to provide structural integrity to each layer during filling; extruding the layers to obtain a multilayer extrudate; removing the processing aid; and stretching the multilayer extrudate to form the multilayer polytetrafluoroethylene article.

A multilayer polytetrafluoroethylene article produced as described herein includes a first layer comprising a first polytetrafluoroethylene fine powder mixture comprising a processing aid; and a second layer comprising a second polytetrafluoroethylene fine powder mixture comprising a functional additive, wherein the functional additive is configured to impart one or more desired properties to the article not provided by the polytetrafluoroethylene, and wherein the functional additive proved mechanical durability to the multilayer polytetrafluoroethylene article, making a backing layer unnecessary.

The above described and other features are exemplified by the following figures and detailed description.

### BRIEF DESCRIPTION OF THE DRAWINGS

Referring now to the figures, which are exemplary embodiments, and wherein the like elements are numbered alike:
Figure 1 schematically illustrates an exemplary embodiment of a pre-form used in the process of producing the multilayer PTFE article; and
Figure 2 schematically illustrates an exemplary embodiment of another pre-form used in the process of producing the multilayer PTFE article, wherein the layers are the article are concentric.

### DETAILED DESCRIPTION OF THE INVENTION

Disclosed herein is a process for producing multilayer polytetrafluoroethylene (PTFE) articles comprising functional additives configured to add desired properties to the material. Each layer of the multilayer PTFE article formed as described herein can have particular functionalities as desired for a given application. For example, at least one of the layers provides mechanical support for the article. Current PTFE articles, such as membranes, tape, and the like, comprise a backing layer laminated thereon. The backing layer provides mechanical support and sometimes functional attributes to the PTFE membrane that would not otherwise be associated with the PTFE material. The functional additives of the multilayer PTFE articles described herein provide a mechanical structure and functional attributes to the article, making the backing layer unnecessary. By eliminating the need for a backing layer in articles such as PTFE membranes and tapes, a number of process steps can be removed from the manufacture of the multilayer PTFE articles, and a reduction in materials costs can be realized. Moreover, delamination problems between the backing layer and the current PTFE membranes are eliminated by the present disclosure. In other words, the process does not require an additional backing layer to be coated, bonded, or the like to the multilayer PTFE article, in order to impart mechanical durability or other desired properties to the article.

In one embodiment, a process of producing the multilayer expanded PTFE article includes filling a first portion of a pre-form with a layer of a first PTFE powder mixed with a processing aid; filling a second portion of the perform with a layer of a second PTFE powder mixed with a functional additive; disposing a separation layer between the first portion and the second portion, wherein the separation layer is configured to provide structural integrity to each layer during filling; extruding the layers to obtain a multilayer extrudate; removing the processing aid; and expanding the multilayer extrudate to form the multilayer expanded PTFE article.

As mentioned above, at least one layer of the multilayer PTFE article comprises a first PTFE polymer mixed with a functional additive. As used herein, the term "functional additive" is intended to generally refer to any component which can be added to the PTFE powder and is configured to augment (i.e., enhance) the existing properties of the multilayer PTFE article, or to provide one or more desired properties to the article, which the PTFE material alone does not provide. The functional additives can be inorganic additives, organic additives, or a combination thereof. Organic functional additives can include polymers, enzymes, catalysts, and the like, or a combination comprising at least one of the foregoing. Exemplary polymer organic functional additives can include, without limitation, polyvinylidene flouride (PVDF), polyvinylidene diflouride, poly(tetrafluoroethylene-co-hexafluoropropylene (FEP), poly(ethylene-alt-tetrafluoroethylene) (ETFE), polychlorotrifluoroethylene (PCTFE), poly(tetrafluoroethylene-co-perfluoropropyl vinyl ether) (PFA), poly(vinylidene fluoride-co-hexafluoropropylene (PVDF-*co*-HFP), and polyvinyl fluoride (PVF). Other polymeric organic functional additives that can be used to enhance the properties of the multilayer PTFE article can include, without limitation, polyolefin (e.g., polyethylene, polypropylene, polymethylpentene, polystyrene, substituted polystyrenes, poly(vinyl chloride) (PVC), polyacrylonitriles), polyamide, polyester, polysulfone, polyether, acrylic and methacrylic polymers, polyurethane, polycarbonates, polyesters (e.g., polyethylene terephthalic ester, polybutylene terephthalic ester), polyether sulfone, polyphenylene sulfone, cellulosic polymer, polyphenylene oxide, (e.g., nylon, polyphenylene terephthalamide), or a combination comprising at least one of the foregoing polymers.

Exemplary catalysts that can be used as organic functional additives in the multilayer PTFE articles can include catalytic enzymes. Enzymes can function as organic catalysts and function by lowering the activation energy of reactions. The catalytic enzymes can weaken the chemical bonds of the reactants, thereby causing the reactions to proceed faster than without the catalytic enzymes. Exemplary organic catalytic enzymes can include, without limitation, organophosphorous hydrolase (OPH), organophosphorous acid anhydrolase (OPAA), phosphotriesterases (PTE), and the like, or a combination comprising at least one of the foregoing. These catalytic enzymes have decontamination properties and can provide protection to the multilayer PTFE articles against toxic chemical and biological agents. Moreover, these organic catalysts can be used in chemical reactions, wherein the multiplayer PTFE article (e.g., a membrane) includes one or more catalyst layers. For example, the multilayer PTFE article can be utilized as a membrane having a large surface area, wherein the large surface area offers a high percentage yield of reaction products.

Inorganic functional additives can include oxides, zeolites, carbon, calcium carbonate, silica, and the like, or a combination comprising at least one of the foregoing. Exemplary oxide functional additives can include, without limitation, zinc oxide, aluminum oxide, magnesium oxide, silver oxide, iron oxide, titanium oxide, zirconium oxide, manganese oxide, nickel oxide, cobalt oxide, palladium oxide, and the like, or a combination comprising at least one of the foregoing. In one embodiment, layers comprising these metal oxides can act as inorganic catalyst layers in a multilayer PTFE article. Carbon functional additives can comprise, for example, activated carbon. Exemplary zeolite functional additives can include, without limitation, amicite, analcime, barrerite, bellbergite, bikitaite, boggsite, brewsterite, chabazite, clinoptilolite, cowlesite, dachiardite, edingtonite, epistilbite, erionite, faujasite, ferrierite, garronite, gismondine, gmelinite, gobbinsite, gonnardite, goosecreekite, garmotome, herschelite, heulandite, laumontite, levyne, maricopaite, mazzite, merlinoite, mesolite, montesommaite, mordenite, natrolite, offretite, paranatrolite, paulingite, pentasil, perlialite, phillipsite, pollucite, scolecite, sodium achiardite, stellerite, stilbite, tetranatrolite, thomsonite, tschernichite, wairakite, wellsite, willhendersonite, yugawaralite, or a combination comprising at least one of the foregoing.

Further, the functional additives described herein can include therapeutic agents. As used herein, the term therapeutic agent is generally intended to refer to any functional additive that can impart therapeutic or healing properties to a multilayer PTFE article. For example, acetylsalicylic acid (i.e., aspirin) could be included in one or more layers of the article as a therapeutic agent in cardiovascular disease applications. Further therapeutic agents for cancer applications could be employed, such as alkylating agents (e.g., cyclophosphamide, ifosfamide, and the like), antibiotics which affect nucleic acids (e.g., doxorubicin, bleomycin, and the like), platinum compounds (e.g., cisplatin, and the like), mitotic inhibitors (e.g., vincristine, and the like), antimetabolites (e.g., 5-fluorouracil, and the like), camptothecin derivatives (e.g., topotecan, and the like), biological response modifiers (e.g., interferon, and the like), hormone therapies (e.g., tamoxifen, and the like), and the like, or a combination comprising at least one of the foregoing therapeutic agents. Even further, therapeutic agents could be added to the layers of multilayer PTFE articles in wound-healing, bone regeneration, or other like applications. For example, a multilayer PTFE membrane comprising one or more therapeutic agents can be used as a medical implant.

As mentioned above, the layer or layers containing the functional additives in the multilayer PTFE article can impart certain desired properties to the finished article. For example, the functional additives can be added to improve mechanical durability, chemical resistance, high temperature performance, filtration efficiency, absorption, adsorption, abrasion resistance, air permeability, combinations thereof, and the like. Moreover, the functional additives can impart properties, such as antistatic, odor removal, decontamination, therapeutic value, combinations thereof, and other like properties. Further, the functional additives can affect the surface topography of the multilayer PTFE membrane. The changes in surface topography can impart and/or enhance surface characteristics such as, oleophobicity, hydrophilicy, self-cleaning, and the like. Even further, functional additives such as activated carbon, silica, and zeolites can increase the surface area for the multilayer PTFE article and act as a filter medium for membrane and filtration applications.

The functional additives can be present in a layer of the multilayer PTFE article in any amount suitable for imparting the desired properties to the article, without affecting the extrudability of the layers. In one embodiment, the functional additive can be present in a PTFE powder mixture in a range of about 0.05 to about 20 percent by weight (wt%), specifically about 0.5 to about 20 wt%, and more specifically about 1 to about 15 wt%, based on a total weight of the PTFE powder mixture. Likewise, the functional additives can have any suitable particle size for mixing with the PTFE powder and forming a layer that imparts the additive's properties on the multilayer PTFE article. In one embodiment, the functional additive has an average particle size, as measured along a major axis of less than about 100 nanometers (nm); specifically less than about 75 nm, and more specifically less than about 50 nm.

The functional additive is mixed with a PTFE powder to form a PTFE powder mixture, which can be added to a portion of a pre-form and compressed. The functional additive can be mixed with the PTFE by any suitable method for evenly dispersing the additive throughout the PTFE polymer powder, so that the additive is evenly distributed throughout the layer of the article after extrusion. Examples of methods for mixing the functional additive and the PTFE powder can include, without limitation, dry mixing, mixing by dispersion in solution, co-coagulation, and the like.

Another layer of the multilayer PTFE article comprises a second PTFE powder mixed with a processing aid. In one embodiment, the second PTFE powder is different than the first PTFE powder. For example, the PTFE powder in the second layer can have a different molecular weight and/or molecular structure than the first PTFE powder. In another embodiment, the second PTFE powder is the same as the first PTFE powder. The PTFE powders can be fine, free flowing powders having an average bulk density of about 500 grams per liter and an average agglomerate size of between 450 and 500 µm. The PTFE fine powder can be prepared by coagulating an aqueous dispersion of PTFE, and drying the same. In order to extrude the layers of PTFE fine powder mixtures, the powders can be blended with a processing aid, such as a lubricant. An example of a lubricant is a hydrocarbon having a desired vaporization temperature, such as petroleum ether, naptha, paraffin solvents, and the like. The processing aid can added to the PTFE fine powder in a proportion of about 15 to about 25 wt%, based on the total weight of the PTFE fine powder mixture.

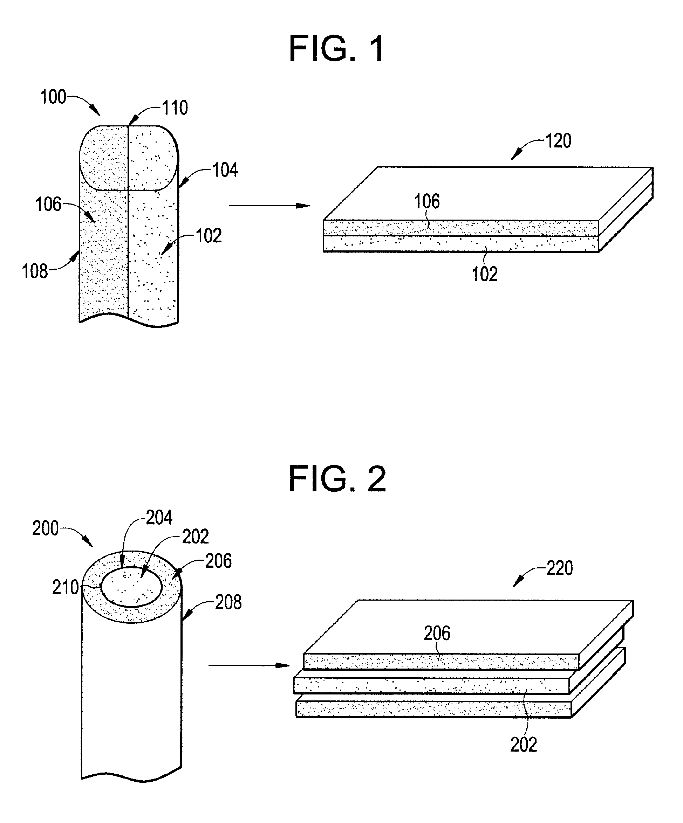

The layer of the second PTFE powder mixture comprising the processing aid can be disposed in a portion of the pre-form different from that of the first PTFE powder mixture layer comprising the functional additive. The pre-form, therefore, comprises two or more layers for holding the PTFE fine powder mixtures. FIG. 1 illustrates an exemplary embodiment of a layered pre-form 100 configured to provide initial structure the layers of the PTFE fine powder mixtures. The present embodiment as illustrated broadly includes two component layers that are referred to herein as first and second or inner and outer layers in order to facilitate an understanding of the present disclosure. It is to be understood, however, that the layers can be reversed or provided in any other desired arrangement, and that more than one layer of either or both of the components, or of a different component, can be provided without departing from the scope of this disclosure. The number of layers, for example, can depend on the end-use applications of the multilayer PTFE article.

The pre-form is rigid and layers of the PTFE fine powder mixtures are lightly pressed into the pre-form. As shown in FIG. 1, a first layer 102 comprising a first PTFE fine powder mixture with the functional additive is disposed in a first portion 104 of the pre-form 100. A second layer 106 comprising the second PTFE fine powder mixture with the processing aid is disposed in a second portion 108 of the pre-form 100.

A separating layer 110 is disposed between the first portion 104 and the second portion 108, and is configured to provide structural integrity to each layer as it is filled in the pre-form 100 and while the layers remain in the pre-form 100 until extrusion. The separating layer 110 can comprise any material suitable for keeping the layers distinct as the pre-form 100 is filled. In one embodiment, the separating layer is a fluorinated polymer sheet, such as a Teflon^{®} sheet. The separating layer 110 is removed after the pre-form 100 has been filled with the desired number of layers (in this example, 2) and before the PTFE layers are compressed in the pre-form.

The pre-form 100 can have any shape configured to receive at least two layers of the PTFE powder. The shape of the pre-form can be determined by the desired application for the multilayer PTFE article. In the embodiment of FIG. 1, the pre-form has a substantially cylindrical shape with a first portion 104 disposed adjacent to a second portion 108. After extrusion of the pre-form layers, stretching, and optional sintering, a multilayer PTFE article 120 is formed.

In another embodiment, a pre-form 200 can also have a substantially cylindrical shape configured to provide concentric layers to a multilayer PTFE article, as illustrated in FIG. 2. As shown in FIG. 2, a first layer 202 comprising a first PTFE fine powder mixture with the functional additive is disposed in a first portion 204 of the pre-form 200. A second layer 206 comprising the second PTFE fine powder mixture with the processing aid is disposed in a second portion 208 of the pre-form 200, concentrically disposed about the first portion 204. A separating layer 210 is disposed between the first portion 204 and the second portion 208, and is configured to provide structural integrity to each layer as it is filled in the pre-form 200 and while the layers remain in the pre-form 200 until extrusion. In this embodiment, the separating layer 210 has a cylindrical shape. The separating layer 210 can comprise, for example, a Teflon^{®} tube. After extrusion of the pre-form layers, stretching, and optional sintering, a multilayer PTFE article 220 is formed.

The concentric layers provide an article in which the properties of the functional additive first layer exist inside the outer second layer. For example, the inner layer could be a scrim layer in a finished multilayer PTFE article. In another embodiment, the layers can be reversed and the properties of the functional additives can be disposed on the outer surface of the finished article. In such an arrangement, the outer layer of the multilayer PTFE article containing the functional additives can provide surface characteristics to the article such as, antiaging, chemical resistance, antifouling, anti-icing, anti-salting, camouflage, fire retardancy, and the like. Such a multilayer PTFE article can be used in systems such as microfiltration, microventing, medical, microelectronic, and other like systems.

Each of the layers can have any thickness desired for the finished article. The pre-form, therefore, can have portions configured to provide a desired layer thickness for the PTFE fine powder mixture. Moreover, each of the layers can have the same or different pore size distributions. For example, the first layer 102 could have a narrow pore size distribution with pores smaller than the second layer 106. The second layer 106 can have a wider range of distribution. The PTFE used herein has a three-dimensional matrix or lattice-type structure of nodes interconnected by numerous fibrils. Surfaces of the nodes and fibrils define numerous interconnecting pores that extend through the PTFE between opposite sides of the layer. As will be discussed in greater detail below, the porosity of the PTFE can vary. The PTFE can be closed pore or the pores can be continuous. In one embodiment, the surfaces of the layers of the multilayer PTFE article define many interconnected pores that fluidly communicate with environments adjacent to the opposite facing major sides of the layers. In a specific embodiment, continuous pores are present, thereby providing permeability to the multilayer PTFE article.

Suitable porosities for layers of the article may be in a range of greater than about 10 percent by volume. In one embodiment, the porosity may be in a range of from about 10 percent to about 20 percent, from about 20 percent to about 30 percent, from about 30 percent to about 40 percent, from about 40 percent to about 50 percent, from about 50 percent to about 60 percent, from about 60 percent to about 70 percent, from about 70 percent to about 80 percent, from about 80 percent to about 90 percent, or greater than about 90 percent by volume. Here and throughout the specification and claims, range limitations may be combined and/or interchanged. Such ranges are identified by their range limitations, and include all the sub-ranges contained therein unless context or language indicates otherwise.

Pore diameter may be uniform from pore to pore, and the pores may define a predetermined pattern. Alternatively, the pore diameter may differ from pore to pore, and the pores may define an irregular pattern. Suitable pore diameters may be less than about 50 micrometers. In one embodiment, an average pore diameter may be in a range of from about 50 micrometers to about 40 micrometers, from about 40 micrometers to about 30 micrometers, from about 30 micrometers to about 20 micrometers, from about 20 micrometers to about 10 micrometers, from about 10 micrometers to about 1 micrometer. In one embodiment, the average pore diameter may be less than about 1 micrometer, in a range of from about 1 micrometer to about 0.5 micrometers, from about 0.5 micrometers to about 0.25 micrometers, from about 0.25 micrometers to about 0.1 micrometers, or less than about 0.1 micrometers. In one embodiment, the average pore diameter may be in a range of from about 0.1 micrometers to about 0.01 micrometers.

In one embodiment, the layers can have a lattice-type structure including a plurality of nodes interconnected by a plurality of fibrils, wherein the surfaces of the nodes and fibrils define a plurality of pores in the layers of the article. The size of a fibril that has been at least partially sintered may be in a range of from about 0.05 micrometers to about 0.5 micrometers in diameter taken in a direction normal to the longitudinal extent of the fibril. The specific surface area of the porous article may be in a range of from about 0.5 square meters per gram of layer material to about 110 square meters per gram of layer material. To provide a permeable article, for example, these surfaces of the nodes and fibrils define interconnecting pores that extend through the layers of the article between opposite major side surfaces in a tortuous path. Such layers and structure of the multilayer PTFE articles can find applications in liquid filtration, microventing, air pollution control, and the like. Exemplary average effective pore size for pores in the layers of such articles may be in a range of from about 0.01 micrometers to about 0.1 micrometers, from about 0.1 micrometers to about 5 microns, from about 5 micrometers to about 10 micrometers, or greater than about 10 micrometers.

After filling each portion of the pre-form with the desired PTFE fine powder mixtures and the separating layer or layers are removed, the mixtures can be compressed in the pre-form to form the individual layers. The mixtures can be compressed as each portion (i.e., layer) is added to the pre-form, or the entire article can be compressed after the pre-form is filled completely with the PTFE fine powder mixtures. The pre-form 100 can then be placed in a cylinder of a paste-extruding mold and pushed with a ram. By pushing the pre-form 100 through a nozzle orifice of the mold, each of the layers in the pre-form 100 are completely united to form a multilayer paste-extruded sheet (i.e., extrudate) in which each layer has a uniform thickness.

After forming the multilayer extrudate, the processing aid can be removed from the material. The removal of the processing aid can be conducted by extraction and/or drying. The processing aid can be removed before or after the extrudate is stretched. To remove the processing aid by heat, the temperature will depend upon the type of processing aid used and will be sufficient to vaporize the processing aid. In general, the heating temperature is from about to 200 to 300 degrees Celsius (°C), specifically 250 °C. When heating the multilayer extrudate to remove the processing aid, care should be given to avoid heating the sheet to above the melting point of the PTFE (about 327 °C).

The multilayer extrudate can then be expanded to form an expanded PTFE multilayer article. The extrudate can be expanded by any method suitable for opening up the pores of the PTFE material to form the ePTFE. For example, the multilayer PTFE extrudate can be expanded by stretching the extrudate in at least one axis. The stretching can occur uniaxially or biaxially. The multilayer extrudate can be preheated before being stretched. In the case of biaxial expanding, the extrudate can be expanded in the two directions at once, or one at a time. Stretching the multilayer extrudate is effective in producing a porous PTFE article, as described above. The multilayer PTFE extrudate is stretched in an unsintered state. The stretching is generally carried out between rolls revolving at different speeds or having different diameters, or by means of a tenter in an expansion oven. In the case of uniaxially stretching, the multilayer extrudate is stretched in a direction parallel with or perpendicular to the extruding direction. In the case of biaxial stretching, the multilayer extrudate is first stretched in the same manner as above, and subsequently further stretched in a direction perpendicular to the first stretching.

Through the stretching, each layer in the multilayer extrudate comes to be of a porous structure in which pores are present uniformly throughout the layer. Thus a porous multilayer PTFE article in which each layer has pores is finally obtained. By stretching the multilayer extrudate fibrils connecting nodes are formed to define the lattice-type structure discussed above. "Expanded" means stretched beyond the elastic limit of the material to introduce permanent set or elongation to the fibrils. Again, the thickness and the microstructure of the multilayer PTFE article is controlled by adjusting the stretching parameters.

The microstructure of the multilayer PTFE article can be further stabilized by a sintering process. In the sintering process, the multilayer PTFE article thus obtained can be heated at a temperature above the crystalline melting point of the PTFE to lock the expanded porous structure. In one embodiment, the porous multilayer PTFE article is heat-treated at temperature of about 340 to about 380 °C, which is slightly higher than the melting point of PTFE (about 327 °C) and lower than the decomposition temperature of PTFE. The article can be sinetered for a period of time of about 5 to 30 seconds to heat-set the material. Sintering the multilayer PTFE article reduces and minimizes residual stress in the material by changing portions of the material from a crystalline state to an amorphous state. In one embodiment, the article may be unsintered or partially sintered as is appropriate for the contemplated end use.

The multilayer PTFE articles comprising the functional additives disclosed herein can be advantageously employed in a variety of applications. Exemplary applications can include, without limitation, air pollution and liquid filtration, chemical/biological decontamination suites, microventing media, medical, microelectronic, combinations thereof, and the like. Each layer of the multilayer PTFE article formed as described herein can have particular functionalities as desired for a given application. For example, at least one of the layers provides mechanical support for the article. The functional additives of the multilayer PTFE articles described herein provide a mechanical structure and functional attributes to the article, making a supportive backing layer unnecessary. By eliminating the need for the backing layer in articles such as PTFE membranes and tapes, a number of process steps can be removed from the manufacture of the multilayer PTFE articles and a reduction in materials costs can be realized. Moreover, delamination problems between the backing layer and the current PTFE membranes are eliminated by the present disclosure. In other words, the process does not require an additional backing layer to be coated, bonded, or the like to the multilayer PTFE article, in order to impart mechanical durability or other desired properties to the article.

The terminology used herein is for the purpose of describing particular embodiments only and is not intended to be limiting of the invention. Ranges disclosed herein are inclusive and combinable (e.g., ranges of "up to about 25 wt%, or, more specifically, about 5 wt% to about 20 wt%", is inclusive of the endpoints and all intermediate values of the ranges of "about 5 wt% to about 25 wt%," etc.). "Combination" is inclusive of blends, mixtures, alloys, reaction products, and the like. Furthermore, the terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the stated value and has the meaning dictated by context, (e.g., includes the degree of error associated with measurement of the particular quantity). The suffix "(s)" as used herein is intended to include both the singular and the plural of the term that it modifies, thereby including one or more of that term (e.g., the colorant(s) includes one or more colorants). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

Unless otherwise defined, all terms (including technical and scientific terms) used herein have the same meaning as commonly understood by one of ordinary skill in the art to which the embodiments of the invention belong. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

While the disclosure has been described with reference to an exemplary embodiment, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.

For completeness, various aspects of the invention are set out in the following numbered clauses:
1. A process of producing a multilayer expanded polytetrafluoroethylene article, comprising:
   filling a pre-form with two or more layers of a polytetrafluoroethylene fine powder, wherein at least one layer comprises a functional additive and at least one layer comprises a processing aid;
   disposing a separation layer between the two or more layers, wherein the separation layer is configured to provide structural integrity to each layer during filling;
   extruding the two or more layers to obtain a multilayer extrudate;
   removing the processing aid; and
   expanding the multilayer extrudate to form the multilayer expanded polytetrafluoroethylene article.
2. The process of clause 1, wherein the functional additive is configured to impart a desired property to the article, and comprises an inorganic additive, an organic additive, a therapeutic agent, or a combination thereof.
3. The process of clause 2, wherein the organic additive comprises a polymer, catalytic enzyme, or a combination comprising at least one of the foregoing.
4. The process of clause 3, wherein the polymer comprises polyvinylidene fluoride, polyvinylidene difluoride, poly(tetrafluoroethylene-co-hexafluoropropylene, poly(ethylene-alt-tetrafluoroethylene), polychlorotrifluoroethylene, poly(tetrafluoroethylene-co-perfluoropropyl vinyl ether), poly(vinylidene fluoride-co-hexafluoropropylene, polyvinyl fluoride, polyolefin, polyamide, polyester, polysulfone, polyether, acrylic and methacrylic polymer, polystyrene, polyurethane, polycarbonate, polyether sulfones, polypropylene, polyethylene, polyphenylene sulfone, cellulosic polymer, polyphenylene oxide, or a combination comprising at least one of the foregoing.
5. The process of clause 3, wherein the catalytic enzyme comprises organophosphorous hydrolase, organophosphorous acid anhydrolase, phosphotriesterases, or a combination comprising at least one of the foregoing.
6. The process of clause 2, wherein the therapeutic agent is configured to provide a selected one or both of a therapeutic and healing property to the multilayer polytetrafluoroethylene article, and wherein the therapeutic agent comprises acetylsalicylic acid, alkylating agent, nucleic acid, platinum compound, mitotic inhibitor, antimetabolite, camptothecin derivative, biological response modifier, hormone therapies, or a combination comprising at least one of the foregoing.
7. The process of clause 2, wherein the inorganic additive comprises metal oxide, zeolite, carbon, calcium carbonate, silica, or a combination comprising at least one of the foregoing.
8. The process of clause 7, wherein the metal oxide comprises zinc oxide, aluminum oxide, magnesium oxide, silver oxide, iron oxide, titanium oxide, zirconium oxide, manganese oxide, nickel oxide, cobalt oxide, palladium oxide, or a combination comprising at least one of the foregoing.
9. The process of clause 7, wherein the zeolite comprises amicite, analcime, barrerite, bellbergite, bikitaite, boggsite, brewsterite, chabazite, clinoptilolite, cowlesite, dachiardite, edingtonite, epistilbite, erionite, faujasite, ferrierite, garronite, gismondine, gmelinite, gobbinsite, gonnardite, goosecreekite, garmotome, herschelite, heulandite, laumontite, levyne, maricopaite, mazzite, merlinoite, mesolite, montesommaite, mordenite, natrolite, offretite, paranatrolite, paulingite, pentasil, perlialite, phillipsite, pollucite, scolecite, sodium achiardite, stellerite, stilbite, tetranatrolite, thomsonite, tschernichite, wairakite, wellsite, willhendersonite, yugawaralite, or a combination comprising at least one of the foregoing.
10. The process of clause 1, further comprising sintering the multilayer polytetrafluoroethylene article.
11. The process of clause 1, wherein removing the processing aid comprises heating the multilayer extrudate to remove the processing aid.
12. The process of clause 1, further comprising compressing the two or more layers in the pre-form.
13. The process of clause 12, further comprising removing the separation layer subsequent to filling the pre-form, prior to compressing the two or more layers.
14. The process of clause 1, further comprising heating the multilayer extrudate to a temperature greater than a crystalline melting point of the first and the second polytetrafluoroethylene fine powders prior to stretching the multilayer extrudate.
15. The process of clause 1, wherein expanding comprises stretching the multilayer extrudate in a first direction and stretching the multilayer extrudate in a second direction substantially perpendicular to the first direction.
16. A process for producing a multilayer expanded polytetrafluoroethylene article, comprising:
   filling a first portion of a pre-form with a layer of a first polytetrafluoroethylene fine powder mixed with about 15 to about 25 percent by weight processing aid, based on the total weight of the first polytetrafluoroethylene fine powder mixture;
   filling a second portion of the pre-form with a layer of a second polytetrafluoroethylene fine powder mixed with about 0.05 to about 20 percent by weight functional additive, based on the total weight of the second polytetrafluoroethylene fine powder mixture;
   disposing a separation layer between the first portion and the second portion, wherein the separation layer is configured to provide structural integrity to each layer during filling;
   extruding the layers to obtain a multilayer extrudate;
   removing the processing aid; and
   stretching the multilayer extrudate to form the multilayer expanded polytetrafluoroethylene article.
17. A multilayer polytetrafluoroethylene article, comprising:
   a first layer comprising a first polytetrafluoroethylene fine powder mixture comprising a processing aid; and
   a second layer comprising a second polytetrafluoroethylene fine powder mixture comprising a functional additive, wherein the functional additive is configured to impart one or more desired properties to the article not provided by the polytetrafluoroethylene, and wherein the functional additive provides mechanical durability to the multilayer polytetrafluoroethylene article, making a backing layer unnecessary.
18. The multilayer polytetrafluoroethylene article of clause 17, wherein the second layer is concentrically disposed about the first layer.
19. The multilayer polytetrafluoroethylene article of clause 17, wherein the article is an expanded polytetrafluoroethylene membrane.
20. The multilayer polytetrafluoroethylene article of clause 17, wherein the article is an expanded polytetrafluoroethylene tape.

## Claims

1. A process of producing a multilayer expanded polytetrafluoroethylene article, comprising:
filling a pre-form with two or more layers of a polytetrafluoroethylene fine powder, wherein at least one layer comprises a functional additive and at least one layer comprises a processing aid;
disposing a separation layer between the two or more layers, wherein the separation layer is configured to provide structural integrity to each layer during filling;
extruding the two or more layers to obtain a multilayer extrudate;
removing the processing aid; and
expanding the multilayer extrudate to form the multilayer expanded polytetrafluoroethylene article.

2. The process of Claim 1, wherein the functional additive is configured to impart a desired property to the article, and comprises an inorganic additive, an organic additive, a therapeutic agent, or a combination thereof.

3. The process of Claim 2, wherein the organic additive comprises a polymer, catalytic enzyme, or a combination comprising at least one of the foregoing.

4. The process of Claim 3, wherein the polymer comprises polyvinylidene fluoride, polyvinylidene difluoride, poly(tetrafluoroethylene-co-hexafluoropropylene, poly(ethylene-alt-tetrafluoroethylene), polychlorotrifluoroethylene, poly(tetrafluoroethylene-co-perfluoropropyl vinyl ether), poly(vinylidene fluoride-co-hexafluoropropylene, polyvinyl fluoride, polyolefin, polyamide, polyester, polysulfone, polyether, acrylic and methacrylic polymer, polystyrene, polyurethane, polycarbonate, polyether sulfones, polypropylene, polyethylene, polyphenylene sulfone, cellulosic polymer, polyphenylene oxide, or a combination comprising at least one of the foregoing.

5. The process of Claim 3 or Claim 4, wherein the catalytic enzyme comprises organophosphorous hydrolase, organophosphorous acid anhydrolase, phosphotriesterases, or a combination comprising at least one of the foregoing.

6. The process of any one of Claims 2 to 5, wherein the therapeutic agent is configured to provide a selected one or both of a therapeutic and healing property to the multilayer polytetrafluoroethylene article, and wherein the therapeutic agent comprises acetylsalicylic acid, alkylating agent, nucleic acid, platinum compound, mitotic inhibitor, antimetabolite, camptothecin derivative, biological response modifier, hormone therapies, or a combination comprising at least one of the foregoing.

7. The process of any one of Claims 2 to 6, wherein the inorganic additive comprises metal oxide, zeolite, carbon, calcium carbonate, silica, or a combination comprising at least one of the foregoing.

8. The process of Claim 7, wherein the metal oxide comprises zinc oxide, aluminum oxide, magnesium oxide, silver oxide, iron oxide, titanium oxide, zirconium oxide, manganese oxide, nickel oxide, cobalt oxide, palladium oxide, or a combination comprising at least one of the foregoing.

9. The process of Claim 7, wherein the zeolite comprises amicite, analcime, barrerite, bellbergite, bikitaite, boggsite, brewsterite, chabazite, clinoptilolite, cowlesite, dachiardite, edingtonite, epistilbite, erionite, faujasite, ferrierite, garronite, gismondine, gmelinite, gobbinsite, gonnardite, goosecreekite, garmotome, herschelite, heulandite, laumontite, levyne, maricopaite, mazzite, merlinoite, mesolite, montesommaite, mordenite, natrolite, offretite, paranatrolite, paulingite, pentasil, perlialite, phillipsite, pollucite, scolecite, sodium achiardite, stellerite, stilbite, tetranatrolite, thomsonite, tschernichite, wairakite, wellsite, willhendersonite, yugawaralite, or a combination comprising at least one of the foregoing.

10. The process of any preceding claim, further comprising sintering the multilayer polytetrafluoroethylene article.

11. The process of any preceding claim, wherein removing the processing aid comprises heating the multilayer extrudate to remove the processing aid.

12. The process of any preceding claim, further comprising compressing the two or more layers in the pre-form.

13. The process of Claim 12, further comprising removing the separation layer subsequent to filling the pre-form, prior to compressing the two or more layers.

14. The process of any preceding claim, wherein filling the pre-form comprises:
filling a first portion of a pre-form with a layer of a first polytetrafluoroethylene fine powder mixed with about 15 to about 25 percent by weight processing aid, based on the total weight of the first polytetrafluoroethylene fine powder mixture;
filling a second portion of the pre-form with a layer of a second polytetrafluoroethylene fine powder mixed with about 0.05 to about 20 percent by weight functional additive, based on the total weight of the second polytetrafluoroethylene fine powder mixture.

15. A multilayer polytetrafluoroethylene article, comprising:
a first layer comprising a first polytetrafluoroethylene fine powder mixture comprising a processing aid; and
a second layer comprising a second polytetrafluoroethylene fine powder mixture comprising a functional additive, wherein the functional additive is configured to impart one or more desired properties to the article not provided by the polytetrafluoroethylene, and wherein the functional additive provides mechanical durability to the multilayer polytetrafluoroethylene article, making a backing layer unnecessary.
